# EUROPEAN PATENT SPECIFICATION

(11) **EP 2 232 010 B1**
(45) Date of publication and mention of the grant of the patent: **21.08.2013**
(21) Application number: 08868241.4
(22) Date of filing: 18.12.2008
(51) Int. Cl.: E21B 43/267, C09K 8/80

(54) **CONDUCTIVITY ENHANCING STRUCTURES FOR USE WITH PROPPANTS IN OIL AND GAS WELLS**
LEITFÄHIGKEITSVERSTÄRKENDE STRUKTUREN ZUR VERWENDUNG MIT STÜTZMITTELN BEI ÖL- UND GASBOHRUNGEN
STRUCTURES D'AMÉLIORATION DE LA CONDUCTIVITÉ DESTINÉES À ÊTRE UTILISÉES AVEC DES AGENTS DE SOUTÈNEMENT DANS DES PUITS DE GAZ ET DE PÉTROLE

(30) Priority: 28.12.2007 US 9354
(43) Date of publication of application: 29.09.2010
(73) Proprietor: Saint-Gobain Ceramics and Plastics, Inc., Worcester, MA 01615-0008 (US)
(72) Inventor: STEPHENS, Walter T., Cleveland, Ohio 44113 (US)
(74) Representative: Leidescher, Thomas
(86) International application number: PCT/US2008/087431
(87) International publication number: WO 2009/085955

(56) References cited:
- GB-A- 2 426 023
- US-A- 4 462 466
- US-A1- 2006 113 078
- US-A1- 2007 084 602
- US-A1- 2007 131 424
- US-A1- 2007 193 745
- US-B1- 6 330 916
- US-B2- 6 780 804

## Description

### BACKGROUND OF THE INVENTION

This application claims the benefit of U.S. Provisional Application No. 61/009,354, filed December 28, 2007, and incorporated by reference.

This invention generally relates to proppants used in downhole applications to facilitate the removal of fluids such as gases and liquids from geological formations. More particularly, this invention is concerned with improving the conductivity of the proppants used in the downhole applications.

Numerous patents and published patent applications disclose modifications to the proppant to improve particular aspects of its performance. For example, US published patent application 2007/0131424 discloses a proppant having a non-globular and non-fibrous shape and used to reduce or eliminate proppant and particle flow back. Specific shapes are disclosed in Fig. 1A to Fig. 1I. In US 4,462,466, each particle has at least one passageway formed substantially directly therethrough for increased permeability to the flow of fluids from the subterranean formation. US published patent application 2007/0084602, discloses a proppant which consists of a mixture of from 10 to 95% by weight of a spherical proppant and from 5 to 90% by weight of an angular material, the percentages being based on the total weight of the mixture. The proppant obtained is described as useful for eliminating or decreasing the "flow-back" phenomenon in operations in oil or gas wells. US 6,780,804 discloses proppants having an extended particles size distribution which exhibits improved properties such as crush strength and conductivity.

### SUMMARY

Embodiments of the present invention improve the conductivity of proppant used in downhole applications.

In one embodiment, the present invention includes a mixture comprising a plurality of first structures being proppant particles and a plurality of second structures being resistivity enhancing structures. Each of the first structures has a convex surface defined by a first radius. The first structures' first radii define an average first radius. Each of the second structures has at least a first concave surface defined by a second radius. The second structures' second radii define an average second radius. The average first radius is equal to or less than the average second radius.

### BRIEF DESCRIPTION OF THE DRAWINGS

Fig. 1 is a hypothetical cross section of a conventional proppant pack;
Fig. 2 is a perspective view of a first embodiment of a conductivity enhancing structure and three abutting proppant particles;
Fig. 3 is a cross section of a proppant mixture comprising the conductivity enhancing structure of Fig. 2;
Fig. 4 is a perspective view of a second embodiment of a conductivity enhancing structure;
Fig. 5 is a cross section of a proppant mixture comprising the conductivity enhancing structure of Fig. 4; and
Fig. 6 is another cross section of a proppant mixture comprising a plurality of four sided conductivity enhancing structures.

### DETAILED DESCRIPTION

The invention relates to proppants that are useful in increasing the output of oil and gas wells which may be located in porous and permeable subterranean geological formations. The porosity of the formation permits the formation to store oil and gas, and the permeability of the formation permits the oil or gas fluid to move through the formation. Sometimes the permeability of the formation holding the gas or oil is insufficient for economic recovery of oil and gas. In other cases, during operation of the well, the permeability of the formation drops to such an extent that further recovery becomes uneconomical. In such circumstances, it is common to fracture the formation, thereby creating cracks within the formation, by forcing a suitable quantity of proppant into the cracks thereby holding them open so that the gases and liquids that would otherwise be trapped can readily flow through the cracks. Such fracturing is usually accomplished by using a hydraulic pump to force a gel-like fluid down a bore hole. The pressure is increased until cracks form in the underground rock. The proppants, which are suspended in this pressurized fluid, are forced into the cracks or fissures. When the hydraulic pressure is reduced, at least a portion of the proppant material remains in the cracks and functions to prevent the formed fractures from closing.

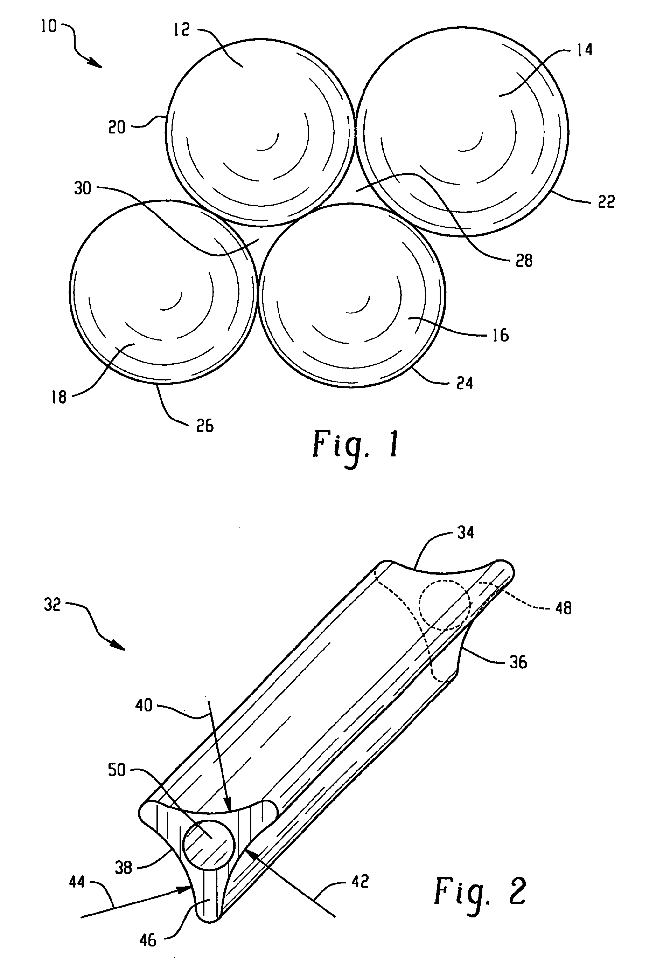

A wide variety of proppant materials are commercially available. The proppant material selected may depend upon factors such as geological conditions and the anticipated value of the fluid to be extracted. Typically, proppants are particulate materials, such as sand, glass beads, or ceramic pellets, which create a porous structure. Shown in Fig. 1 is a cross sectional view of a plurality 10 of proppant particles 12, 14, 16 and 18. Each of the particles has a convex surface 20, 22, 24 and 26, respectively. The particles cooperate to define two interstitial spaces 28 and 30, which may be referred to herein as interstices, and through which fluids such as crude oil, natural gas and water may flow. The cross sectional area of the interstitial spaces may be determined by the diameter of the particles. As the diameter of the particles increases, the cross sectional surface area of the interstitial space also increases. Conversely, as the diameter of the particles decreases, the cross sectional area of the interstitial space decreases. The interstices between the particles allow the oil or gas to flow to collection regions. Pumps are used to move the oil or gas to the well head. Over time, the pressure of the surrounding rock may crush the proppants. The resulting fines from this mechanical failure may migrate and plug the interstitial flow passages in the propped structure. These migratory fines may drastically reduce the conductivity of the proppant which is a measure of the ease with which oil or gas can flow through the proppant structure and may be important to the productivity of a well. When the proppant's conductivity drops below a certain level, the fracturing process may be repeated or the well may be abandoned.

Ceramic proppants, sometimes called man-made proppants, are favored in certain applications over natural proppants, such as sand or resin-coated sand, due to the ceramic proppant's ability to withstand high pressures and temperatures and their resistance to corrosion. Despite being made of higher cost materials than natural materials, and the added cost of making them, the increased crush strength of ceramic renders the ceramic proppants suitable for conditions which are too severe for other materials, e.g., at pressures of above about 350 to 700 kg/cm² (5,000-10,000 psi). As pressure increases with depth, ceramic proppants are commonly used at depths of about 1500 meters or more below the earth's surface. They are typically formed by combining finely ground material, such as clay, bauxite, or alumina, with water and then mixing in a rotary mixer. Blades in the mixer cause the wet mixture to form generally spherical pellets, which upon drying and tiring at high temperature are of the general particle size desired. Pellets which fall outside the desired range are returned to the mixer after the drying stage to be reworked.

One of the important physical characteristics of a plurality of proppant particles is commonly referred to as conductivity which is an estimate of the resistance that the proppant will exert against fluid flow during well production. The conductivity of a proppant may be determined using the procedure described in ISO 13503-5 "Procedures for Measuring the Long-term Conductivity of Proppants". Some attempts to improve conductivity of proppants have focused on methods of reducing the number of fines by using stronger materials, improving crush strength of an individual proppant particle through the application of plastic coatings, changing the shape of the proppant and altering the proppant's particle size distribution. Improving the proppants crush strength reduces or delays the generation of fines that reduce conductivity. Delaying or reducing the generation of fines maintains the conductivity of the proppants. While measurable improvements in conductivity have been obtained, further improvements in the conductivity of the proppant packs are still desired.

Unlike most commercially available proppants which can be generally described as a plurality of spherical particles, this invention may be described as a mixture of proppant particles and conductivity enhancing structures. The proppant particles may also be referred to herein as a plurality of first structures. Similarly, the conductivity enhancing structures may be referred to herein as a plurality of second structures. The physical relationship between the plurality of first structures and the plurality of second structures will be described below.

As used wherein, a first structure may be a proppant particle that has a convex surface whose curvature is defined by a first radius (r₁). The convex surface may represent as much as 100 percent of the particle's surface area or as little as 50 percent of the particle's surface area. The percentage of surface area occupied by the convex surface may be determined by optical examination of the particle. The plurality of proppant particles may be made by mixing dry ingredients, such as bauxite and organic binders, with wet ingredients, such as water, to form large quantities of small spheres that typically range from 100 microns to 2000 microns in diameter. The spherical particles are then fired in a kiln to form sintered particles. Due to normal variability in the formation and sintering processes, a large quantity of proppant particles has a distribution of particle sizes vvhich correspond to a distribution of particle diameters. The sphericity of the particles may range from 0.5 to 1.0. For a given quantity of proppant particles, an optical observation microscope or an optical size analyzer can be used to determine the proppant particles' average particle diameter and, thus, the average radius. The proppant particles' average radius maybe calculated and is herein described as the first structures' first radius (r₁).

As used herein, a second structure may be a conductivity enhancing structure that has a three dimensional structure including at least one concave surface. The conductivity enhancing structure may have two, three, four, five, six or more concave surfaces. The curvature of each concave surface is defined by a radius which is defined for use herein as second radius (r₂). All of the concave surfaces on a conductivity enhancing structure may have substantially the same radius. Two or more radii are considered to be substantially the same if the radii are within ± 10% of that structure's average radius. If the conductivity enhancing structure has a first concave surface with a radius rₐ that is less than the radius r_{b} of a second concave surface on the same conductivity enhancing structure, then the smaller radius rₐ is defined as the second radius (r₂). Some portions of the conductivity enhancing structure may not be concave. For example, a portion of a conductivity enhancing structure's surface may be planar or convex. The structure may include one or more through holes which function as passageways for fluids to pass through the structure.

The physical interaction of the proppant particle and the conductivity enhancing structure provides improved conductivity relative to a proppant comprised solely of the spherical proppant particles. In a mixture of this invention, the first structures' (i.e, proppant particles') average radius (r₁) may be equal to or less than the second structures' (i.e. conductivity enhancing structures') second radius (r₂). This relationship (i.e. r₁ less than or equal to r₂) allows the first structures' convex surfaces to "rest" in the second structure's concave surfaces. To function effectively, only a portion of the first structures in a given mixture of first and second structures need to rest in a second structure's concave surface. While 100% matching of all the first structures' convex surfaces with all of the second structures' concave surfaces may be desirable, attaining complete matching of all the convex surfaces with all of the concave surfaces may not be required to achieve the benefit of this invention.

The volumetric ratio of first structures to second structures in a mixture of this invention may be altered as needed to achieve a desired conductivity. Factors that may be considered when selecting the ratio include at least the following variables: the depth of the well; particle size distribution of the first structures; crush strength of the first structures; crush strength of the second structures; average number of concave surfaces per second structure; and the economic value of the fluid extracted from the well. Ratios of first structure to second structure that are believed to be viable range from 65 to 95 volume percent for the first structure and 5 to 35 volume percent for the second structure.

Referring now to the drawings and more particularly to Fig. 2, there is shown a first embodiment 32 of a conductivity enhancing structure. Embodiment 32 has three concave surfaces 34, 36 and 38 whose curvatures are defined by radii, 40, 42 and 44, respectively. In this embodiment, the radii of the three concave surfaces are the same. In other embodiments, the radii may be different from one another. First embodiment 32 also includes first end surface 46 and second end surface 48. The end surfaces are parallel with one another. Disposed though the center of first embodiment 32 is hole 50 which allows a fluid to pass therethrough.

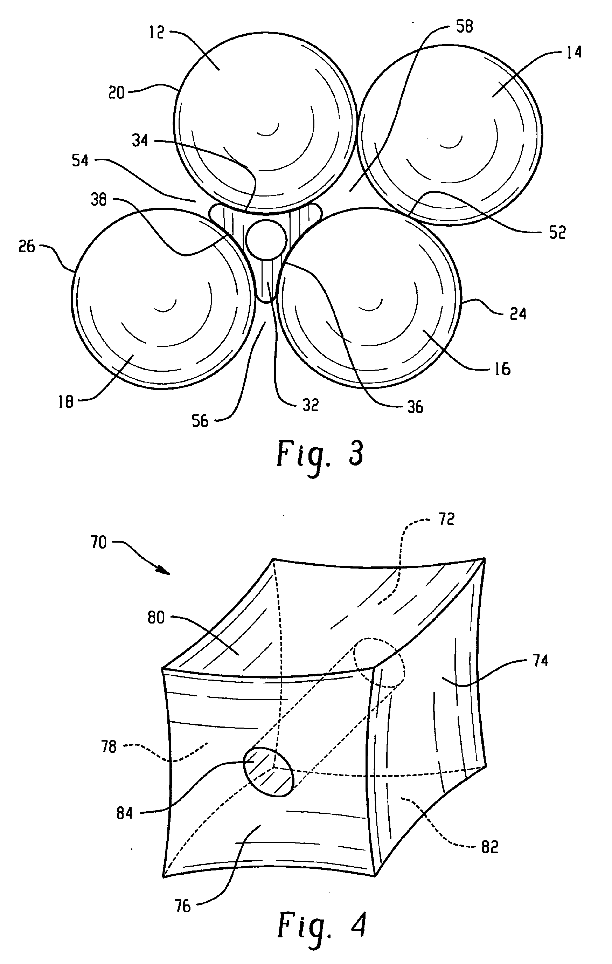

Figure 3 is a cross section of a first embodiment 32 of a conductivity enhancing structure inserted into a plurality 10 of proppant particles (12,14,16 and 18) as disclosed in Fig. 1. The radii of convex surfaces 20, 24 and 26 match the radii of concave surfaces 34, 36 and 38. Conductivity enhancing structure 32 forces the first components away from each other thereby creating larger interstitial areas through which a fluid can pass. Channels 54 and 56, and interstice 58, clearly increase the cross sectional surface area relative to the interstitial cross sectional areas 28 and 30 disclosed in Fig. 1. Furthermore, contact between the convex surfaces and the concave surfaces increases the contact surface area of the proppant particle and reduces the number of point to point contacts between abutting particles. Increasing the contact surface area effectively reduces the point contact mechanical stress exerted on the proppant at a certain well depth. Consequently, the proppant pack will be able to survive at higher closure stresses than a proppant pack that utilizes the same proppant particles and no conductivity enhancing structures.

Fig. 4 discloses a generally cube shaped conductivity enhancing structure 70 that incorporates six concave surfaces 72, 74, 76, 78, 80 and 82, Hole 84 creates a passageway through structure 70. Although not shown, embodiments with additional passageways from surface 74 to surface 78 and/or surface 80 to surface 82 are feasible. Increasing the number of holes through a conductivity enhancing structure may increase the connected porosity through the proppant which improves the conductivity of the proppant.

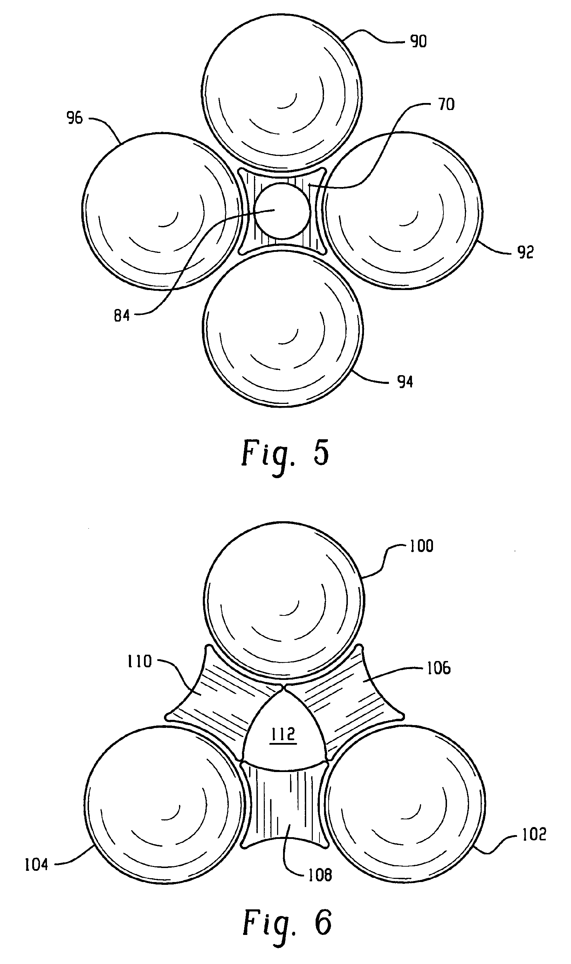

Fig. 5 discloses four proppant particles having convex surfaces and spaced from one another by a conductivity enhancing structure 70 as shown in Fig. 4. The radii of the first components' convex surfaces are equal to one another and the radii of the conductivity enhancing structures four concave surfaces. Hole 84 improves the conductivity of the proppant mixture by enabling the flow of fluids through the hole which has a higher cross sectional surface area than interstitial surface area 28 or 30 shown in Fig. 1.

Shown in Fig. 6 is a possible configuration of spherical proppants 100, 102 and 104 and conductivity enhancing structures 106, 108 and 110. When viewed in cross section, each of the conductivity enhancing structures four sides define a square. Two opposing concave surfaces of each conductivity enhancing structure each abut the convex surface of a spherical proppant. In this configuration, the conductivity enhancing structures define a central region 112 which is much larger than the interstitial space 28 or 30 shown in Fig. 1.

Another possible embodiment is a four sided conductivity enhancing structure shaped like a tetrahedron. One or more concave surfaces could be formed in each of the tetrahedron's four surfaces. In this embodiment, the tetrahedron's four surfaces define the conductivity enhancing structure's total surface area. In contrast, the surface area of the embodiment shown in Fig. 6 is equal to the sum of the surface areas of the six concave surfaces.

In certain downhole applications, the ratio of proppant particles to conductivity enhancing structures may be controlled to further improve the proppant's conductivity. The ratio of proppant particles to conductivity enhancing structures may be selected to achieve a desired conductivity. If the conductivity enhancing structure has two, three, four, five or six concave surfaces, then the ratio may equal or exceed 2:1, 3:1, 4:1, 5:1 1 or 6:1, respectively. As a general guideline, the number of proppant particles may approximately equal or exceed the number of concave surfaces.

Further improvements to the conductivity of the proppant may be achieved by combining proppant particles with conductivity enhancing structures having a first shape and a second shape. For example, within one mixture of proppant particles and conductivity enhancing structures, fifty percent of the conductivity enhancing structures may have a first shape that includes an odd number of concave surfaces incorporated therein, such as the three concave surface embodiment shown in Fig. 2, and fifty percent of the conductivity enhancing structures may have a second shape that includes an even number of concave surfaces incorporated therein, such as the six concave surface embodiment shown in Fig. 4.

The above description is considered that of particular embodiments only. Modifications of the invention will occur to those skilled in the art and to those who make or use the invention. Therefore, it is understood that the embodiments shown in the drawings and described above are merely for illustrative purposes and are not intended to limit the scope of the invention, which is defined by the following claims as interpreted according to the principles of patent law.

## Claims

1. A mixture, comprising:
a plurality of first structures being proppant particles (12, 14, 16, 18) and a plurality of second structures being conductivity enhancing structures (32),
each of said first structures having a convex surface (20, 24, 26) defined by a first radius, said first structures' first radii defining an average first radius;
each of said second structures having at least a first concave surface (34) defined by a second radius, said second structures' second radii defining an average second radius; and
wherein said average first radius is equal to or less than said average second radius.

2. The mixture of claim 1 wherein at least one of said second structures further comprises a second concave surface.

3. The mixture of claim 2 wherein at least one of said second structures further comprises a third concave surface.

4. The mixture of claim 3 wherein at least one of said second structures further comprises a fourth concave surface.

5. The mixture of claim 4 wherein at least one of said second structures further comprises fifth and sixth concave surfaces.

6. The mixture of claim 1 wherein said first structures each comprise area sphere.

7. The mixture of claim 4 wherein at least one of said second structures comprises a total surface area and said four concave surfaces define the second structure's total surface area.

8. The mixture of claim 4 wherein said second structure's four concave surfaces define four sides of a tetrahedron.

9. The mixture of claim 5 wherein said second structure's six concave surfaces define a cube.

10. The mixture of claim 1 wherein at least a portion of said first structures' convex surfaces abut a portion of said second structures' concave surfaces.

11. The mixture of claim 1 wherein at least 20 weight percent of said first structures have substantially the same first radii.

12. The mixture of claim 1 wherein at least 20 weight percent of said first structures have substantially different first radii.

13. The mixture of claim 1 comprising a total apparent volume wherein said first structures represent at least 65 volume percent of said mixture's total volume.

14. The mixture of claim 13 wherein said first structures comprise no more than 95 volume percent of said mixture's total volume.

15. The mixture of claim 1 comprising a total apparent volume wherein said second structures represent at least 5 volume percent of said mixture's total volume.

16. The mixture of claim 1 wherein said second structures comprise no more than 35 volume percent of said mixture's total volume.

17. The mixture of claim 1 wherein said plurality of second structures comprise a first shape and a second shape.

18. The mixture of claim 17 wherein said first shape comprises an even number of concave surfaces.

19. The mixture of claim 17 wherein said second shape comprises an odd number of concave surfaces.

## Patentansprüche

1. Mischung, die Folgendes umfasst:
mehrere erste Strukturen, die Stützmittelteilchen (12, 14, 16, 18) sind, und mehrere zweite Strukturen, die leitfähigkeitsverstärkende Strukturen (32) sind;
wobei jede der ersten Strukturen eine konvexe Fläche (20, 24, 26) aufweist, die durch einen ersten Radius definiert ist, wobei die Radien der ersten Strukturen einen Mittelwert des ersten Radius definieren;
wobei jede der zweiten Strukturen mindestens eine erste konkave Fläche (34) aufweist, die durch einen zweiten Radius definiert ist, wobei die zweiten Radien der zweiten Strukturen einen Mittelwert des zweiten Radius definieren; und
wobei der Mittelwert des ersten Radius gleich dem Mittelwert des zweiten Radius oder kleiner als dieser ist.

2. Mischung nach Anspruch 1, wobei mindestens eine der zweiten Strukturen ferner eine zweite konkave Fläche umfasst.

3. Mischung nach Anspruch 2, wobei mindestens eine der zweiten Strukturen ferner eine dritte konkave Fläche umfasst.

4. Mischung nach Anspruch 3, wobei mindestens eine der zweiten Strukturen ferner eine vierte konkave Fläche umfasst.

5. Mischung nach Anspruch 4, wobei mindestens eine der zweiten Strukturen ferner fünfte und sechste konkave Flächen umfasst.

6. Mischung nach Anspruch 1, wobei die ersten Strukturen alle Kugelflächen umfassen.

7. Mischung nach Anspruch 4, wobei mindestens eine der zweiten Strukturen einen gesamten Oberflächenbereich umfasst und die vier konkaven Flächen den gesamten Oberflächenbereich der zweiten Struktur definieren.

8. Mischung nach Anspruch 4, wobei die vier konkaven Flächen der zweiten Struktur vier Seiten eines Tetraeders definieren.

9. Mischung nach Anspruch 5, wobei die sechs konkaven Flächen der zweiten Struktur einen Würfel definieren.

10. Mischung nach Anspruch 1, wobei mindestens ein Teil der konvexen Flächen der ersten Strukturen mit einem Teil der konkaven Flächen der zweiten Strukturen aneinander stoßen.

11. Mischung nach Anspruch 1, wobei mindestens 20 Gew.-% der ersten Strukturen im Wesentlichen dieselben ersten Radien besitzen.

12. Mischung nach Anspruch 1, wobei mindestens 20 Gew.-% der ersten Strukturen im Wesentlichen verschiedene erste Radien besitzen.

13. Mischung nach Anspruch 1, die ein gesamtes sichtbares Volumen umfasst, wobei die ersten Strukturen mindestens 65 Vol.-% des gesamten Volumens der Mischung repräsentieren.

14. Mischung nach Anspruch 13, wobei die ersten Strukturen nicht mehr als 95 Vol.-% des gesamten Volumens der Mischung umfassen.

15. Mischung nach Anspruch 1, die ein gesamtes sichtbares Volumen umfasst, wobei die zweiten Strukturen mindestens 5 Vol.-% des gesamten Volumens der Mischung repräsentieren.

16. Mischung nach Anspruch 1, wobei die zweiten Strukturen nicht mehr als 35 Vol.-% des gesamten Volumens der Mischung umfassen.

17. Mischung nach Anspruch 1, wobei die mehreren zweiten Strukturen eine erste Form und eine zweite Form umfassen.

18. Mischung nach Anspruch 17, wobei die erste Form eine gerade Anzahl von konkaven Flächen umfasst.

19. Mischung nach Anspruch 17, wobei die zweite Form eine ungerade Anzahl von konkaven Flächen umfasst.

## Revendications

1. Mélange comportant :
une pluralité de premières structures qui sont des particules (12, 14, 16, 18) d'agent de soutènement et une pluralité de deuxièmes structures qui sont des structures (32) renforçant la conductivité ;
chacune desdites premières structures présentant une surface convexe (20, 24, 26) définie par un premier rayon, les premiers rayons desdites premières structures définissant un premier rayon moyen ;
chacune desdites deuxièmes structures présentant au moins une première surface concave (34) définie par un deuxième rayon, les deuxièmes rayons desdites deuxièmes structures définissant un deuxième rayon moyen ; et
ledit premier rayon moyen étant inférieur ou égal audit deuxième rayon moyen.

2. Mélange selon la revendication 1, au moins une desdites deuxièmes structures comportant en outre une deuxième surface concave.

3. Mélange selon la revendication 2, au moins une desdites deuxièmes structures comportant en outre une troisième surface concave.

4. Mélange selon la revendication 3, au moins une desdites deuxièmes structures comportant en outre une quatrième surface concave.

5. Mélange selon la revendication 4, au moins une desdites deuxièmes structures comportant en outre des cinquième et sixième surfaces concaves.

6. Mélange selon la revendication 1, chacune desdites premières structures comportant une sphère d'aire.

7. Mélange selon la revendication 4, au moins une desdites deuxièmes structures comportant une aire surfacique totale et lesdites quatre surfaces concaves définissant l'aire surfacique totale de la deuxième structure.

8. Mélange selon la revendication 4, les quatre surfaces concaves de ladite deuxième structure définissant quatre faces d'un tétraèdre.

9. Mélange selon la revendication 5, six surfaces concaves de ladite deuxième structure définissant un cube.

10. Mélange selon la revendication 1, au moins une partie des surfaces convexes desdites premières structures portant sur une partie des surfaces concaves desdites deuxièmes structures.

11. Mélange selon la revendication 1, au moins 20 pour cent en poids desdites premières structures présentant sensiblement les mêmes premiers rayons.

12. Mélange selon la revendication 1, au moins 20 pour cent en poids desdites premières structures présentant des premiers rayons sensiblement différents.

13. Mélange selon la revendication 1, comportant un volume apparent total **caractérisé en ce que** lesdites premières structures représentent au moins 65 pour cent en volume du volume total dudit mélange.

14. Mélange selon la revendication 13, lesdites premières structures ne représentant pas plus de 95 pour cent en volume du volume total dudit mélange.

15. Mélange selon la revendication 1 comportant un volume apparent total, lesdites deuxièmes structures représentant au moins 5 pour cent en volume du volume total dudit mélange.

16. Mélange selon la revendication 1, lesdites deuxièmes structures ne représentant pas plus de 35 pour cent en volume du volume total dudit mélange.

17. Mélange selon la revendication 1, ladite pluralité de deuxièmes structures comportant une première forme et une deuxième forme.

18. Mélange selon la revendication 17, ladite première forme comportant un nombre pair de surfaces concaves.

19. Mélange selon la revendication 17, ladite deuxième forme comportant un nombre impair de surfaces concaves.
